# EUROPEAN PATENT APPLICATION

(11) **EP 4 787 498 A1**
(43) Date of publication of application: **05.08.2026**
(21) Application number: 26150402.1
(22) Date of filing: 06.01.2026
(51) Int. Cl.: H01M 4/62, H01M 4/525, H01M 4/38

(54) **RECHARGEABLE LITHIUM BATTERY**

(30) Priority: 23.01.2025 KR 20250010501
(71) Applicant: SAMSUNG SDI CO., LTD., Yongin-si, Gyeonggi-do 17084 (KR)
(72) Inventor: CHOI, Mingu, Yongin-si, Gyeonggi-do 17084 (KR); CHO, Kwanghwan, Yongin-si, Gyeonggi-do 17084 (KR); LEE, Junkyu, Yongin-si, Gyeonggi-do 17084 (KR); PARK, Yong-Kyun, Yongin-si, Gyeonggi-do 17084 (KR); HAN, Da-Un, Yongin-si, Gyeonggi-do 17084 (KR); JUNG, Kyunghwa, Yongin-si, Gyeonggi-do 17084 (KR); CHAE, Wonhyung, Yongin-si, Gyeonggi-do 17084 (KR); IM, Eunhee, Yongin-si, Gyeonggi-do 17084 (KR)
(74) Representative: Michalski Hüttermann & Partner mbB

(57) **Abstract**

The present disclosure relates to a rechargeable lithium battery having desired or improved rapid charge-discharge characteristics. For example, the rechargeable lithium battery of the present disclosure comprises a positive electrode, a negative electrode and a separator interposed between the positive electrode and the negative electrode, wherein the positive electrode comprises a positive electrode active material, a first binder and a first conductive material, the first conductive material comprises carbon nanotubes. A ratio of an ionic resistance of the positive electrode to an ionic resistance of the negative electrode is ≥ 1.4 to ≤ 2.0.

## Description

### CROSS-REFERENCE TO RELATED APPLICATION

This application claims priority to Korean Patent Application No. 10-2025-0010501 filed on January 23, 2025 in the Korean Intellectual Property Office.

### BACKGROUND

The present disclosure relates to a rechargeable lithium battery having desired or improved rapid charge-discharge characteristics.

With increasing presence of battery-powered electronic devices such as, e.g., mobile phones, notebook computers, electric vehicles, and the like, the demand for rechargeable batteries with high energy density and large capacity is increasing. Accordingly, enhancing the performance of rechargeable lithium batteries may be advantageous.

A rechargeable lithium battery generally includes a positive electrode, a negative electrode, and an electrolyte. Both the positive and negative electrodes contain active materials capable of lithium-ion intercalation and deintercalation. Electrical energy is generated through oxidation and reduction reactions as lithium ions move between the electrodes during charging and discharging.

### SUMMARY

An object of the present disclosure is to describe a rechargeable lithium battery having desired or improved rapid charge-discharge characteristics.

A rechargeable lithium battery according to examples of the present inventive concept include a positive electrode, a negative electrode, and a separator interposed between the positive electrode and the negative electrode. The positive electrode includes a positive electrode active material, a first binder, and a first conductive material, and the first conductive material includes carbon nanotubes. A ratio of an ionic resistance of the positive electrode to an ionic resistance of the negative electrode is in a range of ≥ 1.4 to ≤ 2.0.

A rechargeable lithium battery according to another concept of the present disclosure includes a positive electrode, a negative electrode, and a separator interposed between the positive electrode and the negative electrode. An ionic resistance of the positive electrode is about 20 Ω·cm² or less, and a ratio of the ionic resistance of the positive electrode to an ionic resistance of the negative electrode is in a range of ≥ 1.4 to ≤ 2.0.

### BRIEF DESCRIPTION OF DRAWINGS

FIG. 1 is a schematic conceptual diagram of a rechargeable lithium battery according to example embodiments of the present disclosure.
FIGS. 2 to 5 are schematic cross-sectional views of a rechargeable lithium battery according to example embodiments of the present disclosure.
FIG. 6 is a cross-sectional view of a positive electrode for a rechargeable lithium battery according to an example embodiment of the present disclosure.
FIG. 7 is an enlarged view of a positive electrode active material layer according to an example embodiment of the present disclosure.
FIG. 8 is a cross-sectional view of a negative electrode for a rechargeable lithium battery according to an example embodiment of the present disclosure.
FIG. 9 is an enlarged view of a negative electrode active material layer according to an example embodiment of the present disclosure.

### DETAILED DESCRIPTION OF EMBODIMENTS

To fully understand the configuration and effects of the present disclosure, some example embodiments are described with reference to the accompanying drawings. However, the present disclosure is not limited to the following example embodiments and may be implemented in various forms. The example embodiments are provided solely to illustrate the present disclosure and to enable those skilled in the art to fully understand its scope.

In this description, when an element is described as being "on" another element, the element may be "directly on" the other element, or one or more intervening elements may be present therebetween. In the drawings, certain thicknesses may be exaggerated to better illustrate technical details. Throughout the specification, like reference numerals indicate like elements.

The example embodiments described herein may be illustrated using sectional and/or plan views, which are presented as idealized examples of the present disclosure. The thicknesses of layers and regions in the drawings may be exaggerated for clarity. The regions shown in the drawings are for illustrative purposes and should not be construed as limiting the scope of the present disclosure. Although terms such as "first," "second," and "third" may be used to describe various elements, these terms are merely for distinction, and do not imply any particular order or hierarchy. The example embodiments described and illustrated herein include complementary variations.

The terms used in this description serve only to explain various example embodiments and are not intended to limit the present disclosure. Unless explicitly stated otherwise, singular forms may also include plural forms. The terms "comprises/includes" and "comprising/including" do not exclude the presence or addition of one or more other components.

In this description, the phrase "combination thereof" may refer to a mixture, a stack, a composite, a copolymer, an alloy, a blend, or a reaction product.

The phrases "A or B," "at least one of A and B," "at least one of A or B," "A, B, or C," "at least one of A, B, and C," and "at least one of A, B, or C" include any one or all possible combinations of the listed elements.

Unless otherwise specifically defined, the term "particle diameter" refers to an average particle diameter. The particle diameter may represent the median particle size (D50), which corresponds to the diameter of particles at 50 vol% in a cumulative particle size distribution. The average particle diameter (D50) can be measured using widely known methods, such as, e.g., a particle size analyzer, transmission electron microscope (TEM) imaging, or scanning electron microscope (SEM) imaging. Alternatively, dynamic light scattering may be used, where particle counts within size ranges are analyzed to calculate the average particle diameter (D50). Additionally, a laser scattering method may be employed, in which a target particle is dispersed in a solvent, introduced into a laser scattering particle measurement device (e.g., MT3000 from Microtrac, Inc.), irradiated with ultrasonic waves at 28 kHz and 60 W, and subsequently analyzed to determine the D50 value based on a 50% cumulative particle size distribution.

In some example embodiments, the average particle diameter may be determined by randomly or non-systematically selecting 100 or more particles from an electron microscope image. Alternatively, the average particle diameter may be measured using a particle size analyzer and defined as the diameter corresponding to 50 vol% in a cumulative particle size distribution.

When the terms "about" or "substantially" are used in this specification in connection with a numerical value, it is intended that the associated numerical value include a tolerance of ±10% around the stated numerical value. Moreover, when reference is made to percentages in this specification, it is intended that those percentages are based on weight, i.e., weight percentages. The expression "up to" includes amounts of zero to the expressed upper limit and all values therebetween. When ranges are specified, the range includes all values therebetween such as increments of 0.1%.

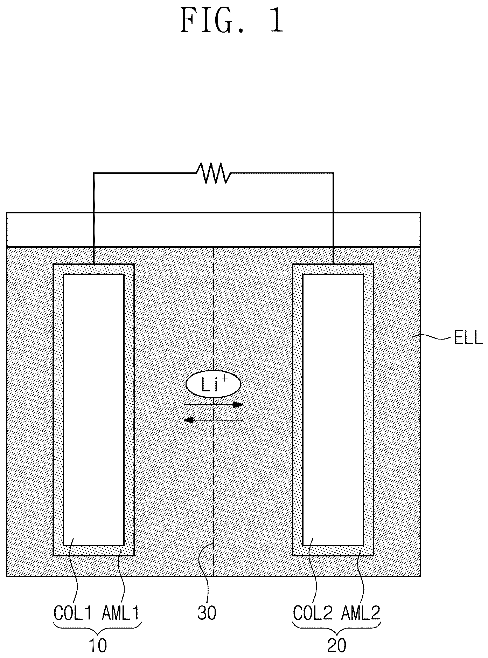

FIG. 1 is a cross-sectional view of a rechargeable lithium battery according to example embodiments of the present invention. Referring to FIG. 1, the rechargeable lithium battery may include a positive electrode 10, a negative electrode 20, a separator 30, and an electrolyte solution ELL.

The positive electrode 10 and the negative electrode 20 may be spaced apart from each other by the separator 30. The separator 30 may be disposed between the positive electrode 10 and the negative electrode 20. The positive electrode 10, the negative electrode 20 and the separator 30 may be in contact with the electrolyte solution ELL. The positive electrode 10, the negative electrode 20 and the separator 30 may be impregnated in the electrolyte solution ELL.

The electrolyte solution ELL may be or include a medium for transferring lithium ions between the positive electrode 10 and the negative electrode 20. In the electrolyte solution ELL, the lithium ions may move through the separator 30 toward the positive electrode 10 or the negative electrode 20.

### Positive Electrode 10

The positive electrode 10 for a rechargeable lithium battery may include a current collector COL1 and a positive electrode active material layer AML1 on the current collector. The positive electrode active material layer AML1 may include a positive electrode active material, and may further include a binder and/or a conductive material (e.g., an electrically conductive material).

For example, the positive electrode 10 may further include an additive that can constitute a sacrificial positive electrode.

An amount of the positive electrode active material may be ≥ 90 wt% to ≤ 99.5 wt% based on 100 wt% of the positive electrode active material layer AML1. Amounts of the binder and the conductive material may be ≥ 0.5 wt% to ≤ 5 wt%, respectively, based on 100 wt% of the positive electrode active material layer AML1.

The binder attaches the positive electrode active material particles to each other, and to attach the positive electrode active material to the current collector COL1. Examples of the binder may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may impart conductivity (e.g., electrical conductivity) to the electrode. Any material that does not cause chemical change (e.g., that does not cause an undesirable chemical change in the rechargeable lithium battery), and that conducts electrons, can be used in the battery. Examples of the conductive material may include a carbon-based material such as at least one of natural graphite, artificial graphite, carbon black, acetylene black, ketjen black, a carbon fiber, a carbon nanofiber, and carbon nanotube; a metal-based material containing copper, nickel, aluminum, silver, and the like, in the form of a metal powder or a metal fiber; a conductive polymer such as a polyphenylene derivative; or a mixture thereof.

Al may be used as the current collector COL1, but the current collector COL1is not limited thereto.

### Positive Electrode Active Material

The positive electrode active material may include a compound (lithiated intercalation compound) that is capable of intercalating and deintercalating lithium. For example, at least one of a composite oxide of lithium and a metal such as or including at least one of cobalt, manganese, nickel, and combinations thereof may be used.

The composite oxide may be or include a lithium transition metal composite oxide. Examples of the composite oxide may include at least one of lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used. LiₐA_{1-b}X_{b}O_{2-c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐNi_{1-b-c}Co_{b}X_{c}O_{2-α}D_{α} (0.90≤a≤1.8, 0≤b≤0.5, 0≤c≤0.5, and 0<α<2); LiₐNi_{1-b-c}Mn_{b}X_{c}O_{2-α}D_{α} (0.90≤a≤1.8, 0≤b≤0.5, 0≤c≤0.5, and 0<α<2); LiₐNi_{b}Co_{c}L¹_{d}GₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); or LiₐFePO₄ (0.90≤a≤1.8).

In the above Chemical Formulas, A is or includes at least one of Ni, Co, Mn, or a combination thereof; X is or includes at least one of Al, Ni, Co, Mn, Cr, Fe, Mg, Sr, V, a rare earth element or a combination thereof; D is or includes at least one of O, F, S, P, or a combination thereof; G is or includes at least one of Al, Cr, Mn, Fe, Mg, La, Ce, Sr, V, or a combination thereof; and L1 is or includes at least one of Mn, Al, or a combination thereof.

The positive electrode active material may be or include, for example, a high nickel-based positive electrode active material having a nickel content that is greater than or equal to ≤ 80 mol%, greater than or equal to ≤ 85 mol%, greater than or equal to ≤ 90 mol%, greater than or equal to ≤ 91 mol%, or greater than or equal to ≤ 94 mol% and less than or equal to ≤ 99 mol% based on 100 mol% of the metal excluding lithium in the lithium transition metal composite oxide. The high-nickel-based positive electrode active material may be capable of realizing high capacity, and can be applicable to a high-capacity, high-density rechargeable lithium battery.

### Negative Electrode 20

The negative electrode 20 for a rechargeable lithium battery may include a current collector COL2, and a negative electrode active material layer AML2 on the current collector COL2. The negative electrode active material layer AML2 may include a negative electrode active material, and may further include a binder and/or a conductive material (e.g., an electrically conductive material).

For example, the negative electrode active material layer AML2 may include ≥ 90 wt% to ≤ 99 wt% of the negative electrode active material, ≥0.5 wt% to ≤ 5 wt% of the binder, and ≥ 0 wt% to ≤ 5 wt% of the conductive material.

The binder may attach the negative electrode active material particles to each other, and attach the negative electrode active material to the current collector COL2. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may impart conductivity (e.g., electrical conductivity) to the electrode. Any material that does not cause chemical change (e.g., that does not cause an undesirable chemical change in the rechargeable lithium battery), and that conducts electrons, can be used in the battery. Non-limiting examples thereof may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminum, silver, and the like, in the form of a metal powder or a metal fiber; a conductive polymer such as a polyphenylene derivative; or a mixture thereof.

The negative current collector COL2 may include at least one of a copper foil, a nickel foil, a stainless steel foil, a titanium foil, a nickel foam, a copper foam, a polymer substrate coated with a conductive metal, or a combination thereof.

### Negative Electrode Active Material

The negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be graphite such as non-shaped, sheet-shaped, flake-shaped, sphere-shaped, or fiber-shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOx (0 < x < 2), a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, SnO₂, a Sn-based alloy, or a combination thereof.

The silicon-carbon composite may be or include a composite of silicon and amorphous carbon. According to an example embodiment, the silicon-carbon composite may be in the form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

### Separator 30

Depending on the type of the rechargeable lithium battery, the separator 30 may be present between the positive electrode 10 and the negative electrode 20. The separator 30 may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 30 may include a porous substrate and a coating layer including an organic material, an inorganic material, or a combination thereof on one surface, or on both surfaces, of the porous substrate.

The porous substrate may be or include a polymer film formed of or including any one or more of polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked together.

### Electrolyte (ELL)

The electrolyte solution ELL for a rechargeable lithium battery may include a non-aqueous organic solvent and a lithium salt.

The non-aqueous organic solvent may constitute a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be used alone or in combination of two or more solvents.

In addition, when using a carbonate-based solvent, a cyclic carbonate and a chain carbonate may be mixed, and the cyclic carbonate and the chain carbonate may be mixed in a volume ratio in a range of ≥ 1:1 to ≤ 1:9.

The lithium salt dissolved in the organic solvent is configured to supply lithium ions in a battery, to enable an operation of a rechargeable lithium battery, and to improve transportation of the lithium ions between positive and negative electrodes. Examples of the lithium salt include at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

### Rechargeable lithium battery

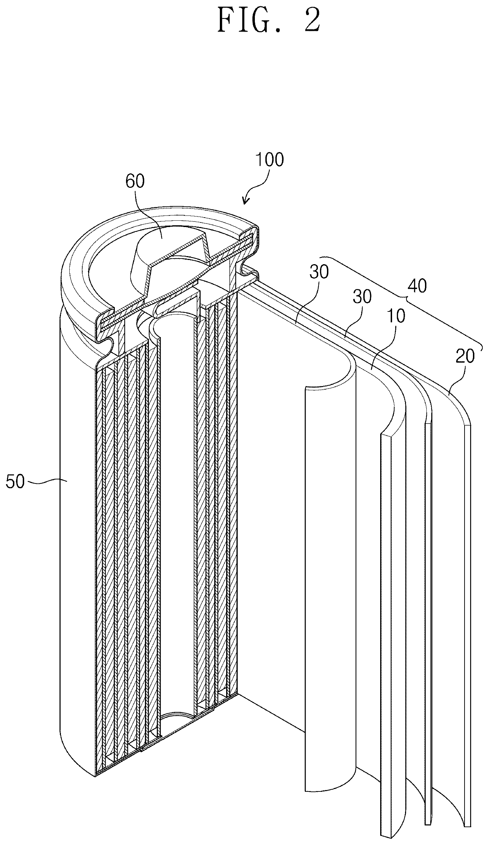

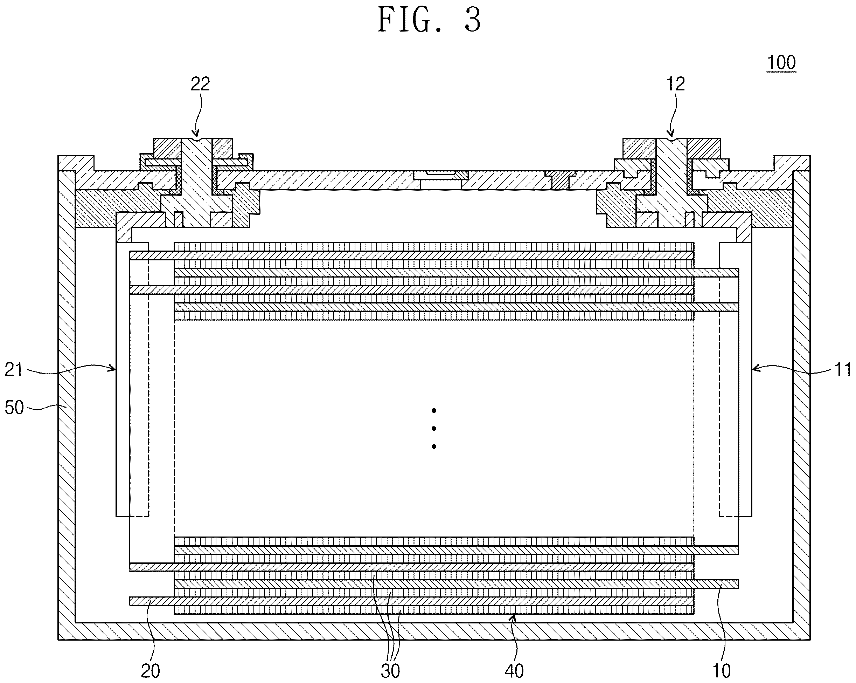

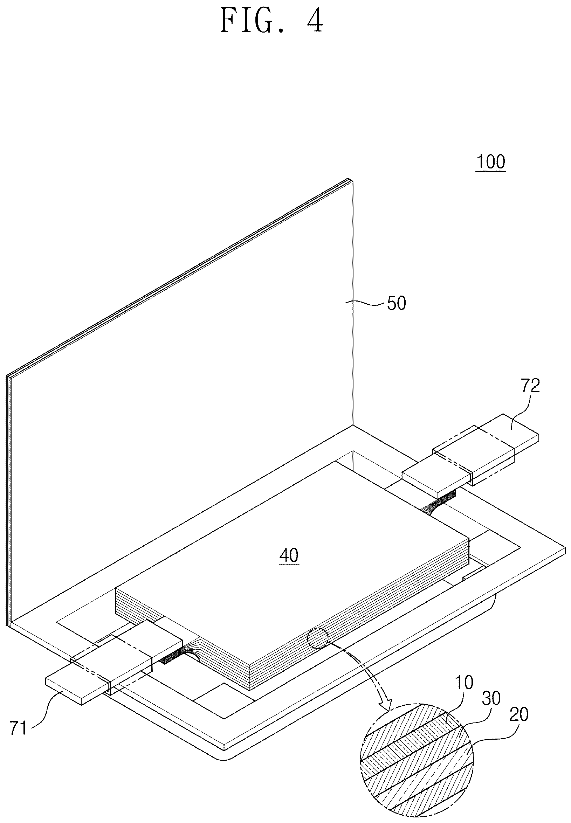

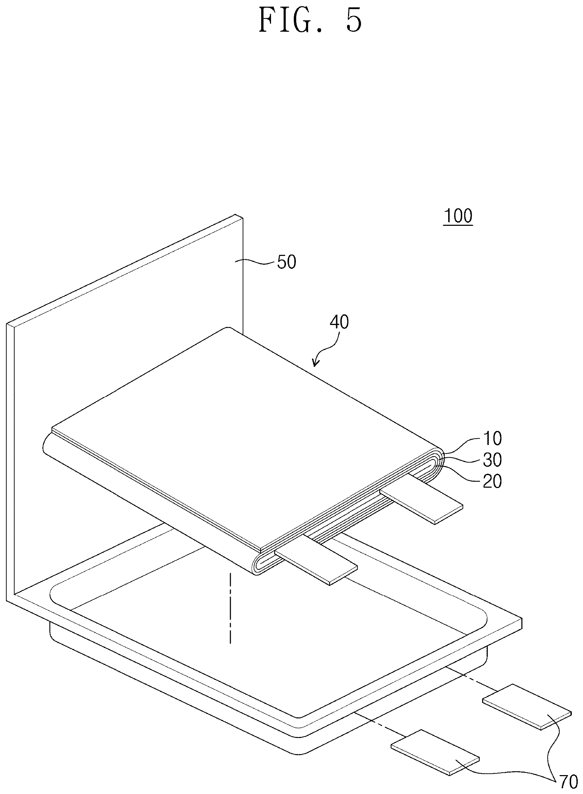

The rechargeable lithium battery may be classified into cylindrical, prismatic, pouch, or coin-type batteries, and the like depending on their shape. FIGS. 2 to 5 are schematic views illustrating a rechargeable lithium battery according to an example embodiment. FIG. 2 shows a cylindrical battery, FIG. 3 shows a prismatic battery, and FIGS. 4 and 5 show pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 2. In FIG. 3, the rechargeable lithium battery 100 may include a positive lead tab 11, a positive terminal 12 connected to the positive lead tab 11, a negative lead tab 21, and a negative terminal 22 connected to the negative lead tab 21. As shown in FIGS. 4 and 5, the rechargeable lithium battery 100 may include an electrode tab 70 illustrated in FIG. 5, or, for example, a positive electrode tab 71 and a negative electrode tab 72 illustrated in FIG. 4, the electrode tabs 70/71/72 forming an electrical path for inducing the current formed in the electrode assembly 40 to the outside of the battery 100.

The rechargeable lithium battery according to an example embodiment may be applicable to, e.g., automobiles, mobile phones, and/or various types of electric devices, as non-limiting examples.

The rechargeable lithium battery according to the example embodiments of the present disclosure has a predetermined or desired ratio between the positive electrode ionic resistance and the negative electrode ionic resistance, and thus is desired or improved in rapid charging characteristics and life characteristics. Hereinafter, features common to the features described above with reference to FIGS. 1 to 5 are not described, and differences are mainly described.

### RECHARGEABLE LITHIUM BATTERY WITH IMPROVED RAPID CHARGING CHARACTERISTICS

A rechargeable lithium battery according to example embodiments of the present disclosure may include a positive electrode 10, a negative electrode 20, and a separator 30 interposed between the positive electrode 10 and the negative electrode 20, as described above with reference to FIG. 1.

The positive electrode 10 may have a first ionic resistance R1ᵢₒₙ, and the negative electrode 20 may have a second ionic resistance R2ᵢₒₙ.

In an example embodiment, a ratio of the first ion resistance R1ᵢₒₙ to the second ion resistance R2ᵢₒₙ may be less than or equal to ≤ 2. For example, a ratio (R1ᵢₒₙ/R2ᵢₒₙ) of the first ionic resistance (R1ᵢₒₙ) to the second ionic resistance (R2ᵢₒₙ) may be in a range of ≥ 1.4 to ≤ 2.0, ≥ 1.4 to ≤ 1.9, or ≥ 1.4 to ≤ 1.8. When the above ratio is out of the above range, the ion conductivity of the positive electrode 10 or the negative electrode 20 is relatively too high, and the charge-discharge efficiency may be reduced. For example, when the ratio exceeds the above range, dendrites may form due to excessive deposition (or precipitation) of lithium, and the life characteristics are deteriorated. The rechargeable lithium battery of the present disclosure has the above ratio range, whereby the ion conduction efficiency in the battery may be improved, and as a result, the rapid charging characteristics may be improved. In addition, by reducing or minimizing lithium deposition that may occur due to ionic resistance imbalance in the positive and negative electrodes, the lifetime characteristics can be improved.

In an example embodiment, the first ionic resistance R1ᵢₒₙ may be less than or equal to ≤ 20 Ω·cm². For example, the first ionic resistance R1ᵢₒₙ may be in a range of ≥ 12 Ω·cm² to ≤ 18 Ω·cm², ≥ 13 Ω·cm² to ≤ 17 Ω·cm², ≥14 Ω·cm² to ≤ 17 Ω/cm², ≥14.5 Ω·cm² to ≤ 16.5 Ω·cm², or ≥ 15 Ω·cm² to ≤ 16 Ω·cm². For example, the positive electrode 10 may include carbon nanotubes as a conductive material as further described below, thereby realizing such a low ionic resistance.

In some example embodiment, the second ionic resistance R2ᵢₒₙ may be less than or equal to ≤ 15 Ω·cm². For example, the second ionic resistance R2ᵢₒₙ may be in a range of ≥ 6 Ω·cm² to ≤ 12 Ω·cm², ≥ 7 Ω·cm² to ≤ 11 Ω·cm² ≥ 8 Ω·cm² to ≤ 11 Ω·cm², or ≥ 8.5 Ω·cm² to ≤ 10.5 Ω·cm².

In some example embodiments, the first ionic resistance R1ᵢₒₙ and second ionic resistance R2ᵢₒₙ values may be obtained by electrochemical impedance spectroscopy (EIS) analysis. For example, the EIS analysis may be performed on the half-cell of the positive electrode 10 (the counter electrode is lithium metal) to obtain a first ionic resistance R1ᵢₒₙ value. The EIS analysis is performed on the half-cell of the negative electrode 20 (the counter electrode is lithium metal), to obtain a second ionic resistance R2ᵢₒₙ. For example, the measurement may be performed by a two-probe method using an impedance analyzer (Solartron 1260A Impedance/Gain-Phase Analyzer) at room temperature (25°C). The first ionic resistance R1ᵢₒₙ value and the second ionic resistance R2ᵢₒₙ value may be obtained by performing EIS analysis in a frequency range of 100 kHz to 1 Hz and a cell open-circuit voltage with an amplitude of 20 mV.

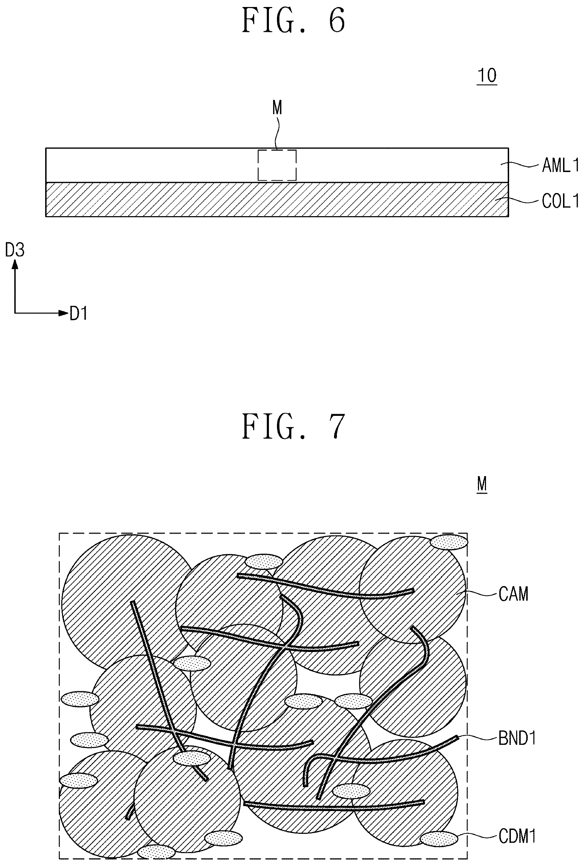

FIG. 6 is a cross-sectional view of a positive electrode 10 according to example embodiments of the disclosure. FIG. 7 is an enlarged view for schematically illustrating the positive electrode active material layer AML1 according to the example embodiments of the present disclosure, which is an enlarged view in which the "M" region in FIG. 6 is enlarged.

Referring to FIGS. 6 and 7, a positive electrode 10 according to example embodiments of the present disclosure may include a positive electrode current collector COL1, and a positive electrode active material layer AML1 positioned on the positive electrode current collector COL1. The description of the positive electrode current collector COL1 is as described above with reference to FIG. 1.

Referring to FIG. 7, the positive electrode active material layer AML1 may include a positive electrode active material CAM, a first binder BND, and a first conductive material CDM1.

The positive electrode active material layer AML1 may include carbon nanotubes (CNTs) as a conductive material. For example, the positive electrode active material layer AML1 may include thin-wall carbon nanotubes (TWCNTs). The thin-wall carbon nanotube (TWCNT) may include a plurality of carbon walls. For example, the thin-wall carbon nanotube (TWCNT) may include a range of ≥ 2 to ≤ 5 carbon walls. The carbon wall may be or include a graphene sheet.

Thin-wall carbon nanotubes (TWCNTs) have a large specific surface area as described below, and exhibit desired or improved electron conductivity even in a small amount by having a small wall thickness. Thus, when the positive electrode active material layer AML1 includes the thin-wall carbon nanotubes (TWCNTs) as a conductive material, the amount of the positive electrode active material CAM may be increased. As a result, the ionic resistance Rᵢₒₙ of the positive electrode 10 may be lowered. Furthermore, the thin-wall carbon nanotubes (TWCNTs) have a large specific surface area, which may further improve the ionic resistance Rᵢₒₙ directly by shortening the ion diffusion path.

In some example embodiments, the specific surface area of the thin-wall carbon nanotubes may be in a range of ≥ 200 m²/g to ≤ 1,300 m²/g. For example, the specific surface area of the thin-wall carbon nanotubes may be ≥ 250 m²/g to ≤ 1,200 m²/g, ≥ 300 m²/g to ≤ 1,000 m²/g, or ≥ 300 m²/g to ≤ 800 m²/g.

In some example embodiments, the wall thickness of the thin-wall carbon nanotubes may be in a range of ≥ 0.3 nm to ≤ 1.8 nm. For example, the wall thickness of the thin-wall carbon nanotubes may be ≥ 0.6 nm to ≤ 1.8 nm, ≥ 0.9 nm to ≤ 1.8 nm, or ≥ 0.9 nm to ≤ 1.5 nm. The thin-wall carbon nanotube may comprise a plurality of carbon walls, and the wall thickness of the thin-wall carbon nanotube may be defined as the total thickness of the plurality of carbon walls.

In some example embodiments, the aspect ratio of the thin-wall carbon nanotubes may be in a range of ≥ 10 to ≤ 3,000. For example, the aspect ratio of the thin-walled carbon nanotubes may be ≥ 10 to ≤ 2,500, ≥ 20 to ≤ 2,000, or ≥ 30 to ≤ 1,500. The aspect ratio of the thin-wall carbon nanotubes may be calculated as the ratio of the length to the diameter of the thin-wall carbon nanotube.

In some example embodiments, the average length of the thin-wall carbon nanotubes may be in a range of ≥ 1 µm to ≤ 1,000 µm. For example, the average length of the thin-wall carbon nanotubes may be ≥ 10 µm to ≤ 800 µm, ≥ 10 µm to ≤ 500 µm, ≥ 20 µm to ≤ 200 µm, or ≥ 20 µm to ≤ 100 µm.

In some example embodiments, the average diameter of the thin-wall carbon nanotubes may be in a range of ≥ 2 nm to ≤ 10 nm. For example, the average diameter of the thin-wall carbon nanotubes may be ≥ 2 nm to 8 nm, or ≥ 4 nm to ≤ 6 nm.

In some example embodiments, the first conductive material CDM1 may further include thin-wall carbon nanotubes as well as other carbon-based materials. The carbon-based material may include at least one of natural graphite, artificial graphite, carbon black, acetylene black, Ketjen black, carbon fiber, carbon nanofiber, or a combination thereof.

In some example embodiments, the positive electrode active material CAM may include the lithium transition metal composite described above. For example, the positive electrode active material CAM may include at least one of a lithium nickel-based oxide, a lithium cobalt-based oxide, a lithium manganese-based oxide, a lithium iron phosphate-based compound, a cobalt-free nickel-manganese-based oxide, or combination thereof. The description of the lithium transition metal composite is the same as the description above with reference to FIG. 1.

In some example embodiments, the amount of the positive electrode active material CAM in the positive electrode active material layer AML1 may be ≥ 97 wt% or more. For example, the total amount of the positive active material CAM in the positive active material layer AML1 may be in a range of ≥ 97.5 wt% to ≤ 99.5 wt%, ≥ 98 wt% to ≤ 99.5 wt%, ≥ 98 wt% to ≤ 98.5 wt%, or ≥ 98 wt% to ≤ 99 wt%. As described above, the use of thin-wall carbon nanotubes as the conductive material may increase the amount of the positive electrode active material CAM in the positive electrode active material layer AML1, thereby shortening the ion conduction path. As a result, the ionic resistance may be lowered and the ion conductivity may be improved.

In some example embodiments, the amount of the conductive material in the positive electrode active material layer AML1 may be about 1 wt% or less. For example, the amount of the conductive material in the positive electrode active material layer AML1 may be in a range of ≥ 0.1 wt% to ≤ 1 wt%, ≥ 0.2 wt% to ≤ 1 wt%, ≥ 0.2 wt% to ≤ 0.8 wt%, or ≥ 0.4 wt% to ≤ 0.6 wt%.

In some example embodiments, the positive electrode active material layer AML1 may include a first binder BND1. The description of the first binder BND1 may be determined from the positive electrode binders described above with reference to FIG. 1.

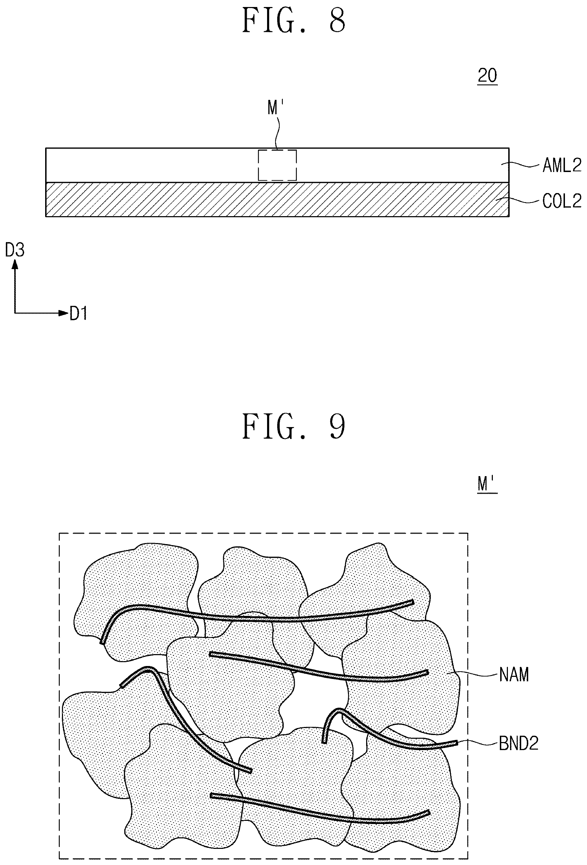

FIG. 8 is a cross-sectional view of a negative electrode 20 according to example embodiments of the disclosure. FIG. 9 is an enlarged view for schematically illustrating the negative electrode active material layer AML2 according to the example embodiments of the present disclosure, which is an enlarged view in which the "M' " region of FIG. 8 is enlarged.

Referring to FIG. 8, a negative electrode 20 according to example embodiments of the present disclosure may include a negative electrode current collector COL2 and a negative electrode active material layer AML2 located on the negative electrode current collector COL2. The current collector COL2 is as described above with reference to FIG. 1.

Referring to FIG. 9, the negative electrode active material layer AML2 may include a negative electrode active material NAM and a second binder BND2. The negative electrode active material layer AML2 may further include a second conductive material.

The negative electrode active material layer AML2 may include ≥ 0.5 wt % to ≤ 5 wt % of the second binder BND2. For example, the negative electrode active material layer AML2 may include ≥ 0.5 wt% or more, or ≥ 1 wt% or more of the second binder BND2. For example, the negative electrode active material layer AML2 may include 5 wt % or less, 4 wt % or less or 3 wt % or less of the second binder BND2.

The type of the second binder BND2 may be determined from the negative electrode binders described above with reference to FIG. 1. For example, the second binder BND2 may include styrene-butadiene rubber or carboxymethyl cellulose.

The negative electrode active material layer AML2 may include ≥ 0 wt% to ≤ 5 wt % of the second conductive material. For example, the negative electrode active material layer AML2 may include ≥ 0.05 wt% or more, ≥ 0.1 wt% or more, or ≥ 0.5 wt% or more of the second conductive material. For example, the negative electrode active material layer AML2 may include ≥ 5 wt % or less, ≥ 4 wt % or less or ≥ 3 wt % or less of the second conductive material, ≥ 2 wt % or less and ≥ 1 wt % or less thereof, or ≥ 0.5 wt % or less.

In some example embodiments of the present disclosure, the second conductive material may be omitted in the negative electrode active material layer AML2. When the negative electrode active material layer AML2 includes graphite as a negative electrode active material, a separate second conductive material may not be included because of desired or improved conductivity of graphite. In some example embodiments of the present disclosure, when silicon (Si) is used as the negative electrode active material at a relatively high ratio, the negative electrode active layer AML2 may further include a second conductive material to increase the conductivity of the negative electrode.

The type of the second conductive material is as described above. For example, the second conductive material may include a carbon-based material. The carbon-based material may include at least one of natural graphite, artificial graphite, carbon black, acetylene black, Ketjen black, carbon fiber, carbon nanofiber, carbon nanotube, or combination thereof. The carbon nanotubes may include single-walled carbon nanotubes (SWCNTs), multi-walled carbon nanoparticles (MWCNTs) or thin-wall carbon nanotubes (TWCNTs).

In some example embodiments, the negative electrode active material NAM may include a silicon-based negative electrode active material.

The silicon-based negative electrode active material may be the same as the electrode active material described above with reference to FIG. 1. For example, the silicon-based negative electrode active material may include at least one of silicon (Si), silicon oxide (SiOₓ, 0<x ≤ 2), a silicon-carbon composite, a silicon-based alloy, or combination thereof. The silicon-carbon composite may include silicon-based material and amorphous carbon, or may include crystalline carbon, silicon-based material, and amorphous carbon. The silicon-based material may be or include silicon (Si) or silicon oxide (SiOₓ, 0<x ≤ 2). The silicon-based alloy refers to the Si-Q alloy described above with reference to FIG. 1, wherein Q is or includes at least one of alkali metals, alkaline earth metals, Group 13 elements, Group 14 elements (excluding Si), Group 15 elements, Group 16 elements, transition metals, rare earth elements, or combinations thereof.

In some example embodiments, when the silicon-carbon composite includes crystalline carbon, a silicon-based material, and amorphous carbon, the crystalline carbon and the silicon-based material form an assembly, and the assembly may be coated with the amorphous carbon. At this time, the amount of the silicon-based material may be in a range of ≥ 1 wt% to ≤ 70 wt%, for example, ≥ 25 wt% to ≤ 65 wt%, with respect to 100 wt% by weight of the entire silicon-based negative electrode active material. In addition, in the silicon-based negative electrode active material, the amount of the amorphous carbon may be in a range of ≥ 20 wt % to ≤ 60 wt % with respect to the total 100 wt % of the silicon-based positive electrode active material, and the amount of the crystalline carbon may be in a range of ≥ 1 wt% to ≤ 40 wt% with respect to the total 100 wt% of the silicon based negative electrode active material.

In some example embodiments, the particle diameter of the silicon-based material may be in a range of ≥ 10 nm to ≤ 30 µm, for example, ≥ 10 nm to ≤ 1000 nm, or ≥ 20 nm to ≤ 150 nm.

In some example embodiments, when the amorphous carbon may be coated on the assembly obtained by assembling the crystalline carbon and the silicon-based material, the thickness of the coating layer of amorphous carbon may be in a range of ≥ 5 nm to ≤ 500 nm.

In some example embodiments, the amount of the negative electrode active material NAM in the negative electrode active material layer AML2 may be in a range of ≥ 90 wt % to ≤ 99 wt %. For example, the amount of the negative electrode active material NAM in the negative electrode active materials layer AML2 may be 95 wt% or more, or ≥ 96 wt% or more. For example, the amount of the negative electrode active material NAM in the negative electrode active material layer AML2 may be about 99 wt% or less, about 98 wt% or less or about 97 wt% or less. Within the above range, the density of the negative electrode active material layer AML2 may be increased. Thus, the expansion coefficient of the negative electrode 20 during charging and discharging may be reduced, and a rechargeable lithium battery having desired or improved capacity, efficiency, and a longer life may be provided.

The negative electrode active material NAM may further include a carbon-based negative electrode active material.

The carbon-based negative electrode active material may include at least one of crystalline carbon, amorphous carbon, or a combination thereof.

In some example embodiments, the average particle diameter (D50) of the carbon-based negative electrode active material may be, for example, in a range of ≥ 1 µm to ≤ 50 µm, for example, ≥ 1 µm to ≤ 40 µm, ≥ 1 µm to ≤ 30 µm, ≥ 1 to ≤ 25 µm, ≥ 1 to ≤ 20 µm, ≥ 2 to ≤ 50 µm, ≥ 5 to ≤ 50 µm, ≥ 10 to ≤ 50 µm or ≥ 15 to ≤ 50 µm. When the carbon-based negative electrode active material having a particle diameter in the above-described range is used, it is possible to secure sufficient voids between the particles while increasing the energy density. Herein, the average particle diameter may be obtained by arbitrarily selecting about 20 particles of the carbon-based negative electrode active material in an electron micrograph of the electrode, measuring the particle diameter, and taking the diameter (D50) of particles having a cumulative volume of 50% by volume in the particle size distribution as the average particle diameter.

In some example embodiments, the amount of the silicon-based negative electrode active material in the negative electrode active material layer AML2 may be in a range of ≥ 2 wt% to ≤ 50 wt%, ≥ 3 wt% to ≤ 30 wt%, or ≥ 5 wt% to ≤ 20 wt%. For example, the silicon-based negative electrode active material may be or include a silicon-carbon composite.

Hereinafter, Examples and Comparative Examples of the present disclosure are described. However, the following examples are merely examples of the present disclosure, and the present disclosure is not limited to the following examples.

### Example 1

### Positive electrode:

Lithium nickel-based composite oxide (LiNi_{0.922}Co_{0.067}Al_{0.011}O₂) particles having an average particle diameter of about 12 µm were used as a positive electrode active material, polyvinylidene fluoride (PVDF) was used as a binder, and thin-wall carbon nanotubes (TWCNTs) having a wall thickness of about 1.0 nm, a specific surface area of 330 m²/g, and an aspect ratio of 120 were used as a conductive material.

A positive electrode active material slurry was prepared in an N-methylpyrrolidone solvent, wherein the amount of the lithium nickel-based composite oxide (LiNi_{0.92 2} Co_{0.067}Al_{0.01 1} O₂ ) was 98.3 wt%, the amount of the PVDF binder was 1.2 wt%, and the amount of the thin-wall carbon nanotubes was 0.5 wt%, based on the total weight of the positive electrode active material slurry.

The positive electrode active material slurry was coated onto an aluminum current collector such that the positive electrode active material had a loading level of about 56 mg/cm². Thereafter, the positive electrode was dried, rolled, and used to produce a positive electrode having an ionic resistance Rᵢₒₙ of 15.0 Ω·cm². Rolling was performed using a rolling mill to a mixture density of 3.76 g/cc. The ionic resistance was measured by a two-probe method using an impedance analyzer (Solartron 1260A Impedance/Gain-Phase Analyzer). EIS analysis was performed at room temperature (25°C), frequency range 100 kHz to 1 Hz, cell open-circuit voltage of amplitude 20 mV.

### Negative electrode:

An ethanol solvent and silicon particles having a particle diameter of several micrometers were mixed at a weight ratio of 8.5:1.5, and silicon nanodispersion was prepared using a bead mill (Nechwi, Germany). The silicon nanodispersion and natural graphite were mixed at a weight ratio of 8.8:1.2, and the mixed liquid was spray-dried at 180°C using a spray dryer to prepare a Si precursor. The obtained Si precursor and mesophase pitch were mixed at a weight ratio of 70:30, and the mixture was heat-treated in an N₂ atmosphere at 900° C for 2 hours to prepare a silicon-carbon composite. This silicon-carbon composite comprises an assembly of silicon nanoparticles aggregated into secondary particles. The silicon-carbon composite was in the form of a soft carbon coating layer formed on the assembly surface, wherein the amount of silicon nanoparticles was 61.6 wt%, the amount of soft carbon amorphous carbon was 30 wt%, and the amount of natural graphite was 8.4 wt%, based on the total weight of the silicon-carbon composite. The thickness of the soft carbon coating layer was 100 nm.

For negative electrode active material slurry preparation, the silicon-carbon composite prepared above and graphite (artificial graphite and natural graphite weight ratio 1:1) were used as the negative electrode active material, and carboxymethyl cellulose and styrene-butadiene rubber were used as the binder.

A negative electrode active material slurry was prepared by mixing 9.6 wt% silicon-carbon composite, 86.59 wt% graphite, 1.4 wt% carboxymethyl cellulose, 0.07 wt% single-wall nanotubes (SWCNTs), 0.14 wt% polyvinylpyrrolidone, and 2.2 wt% styrene-butadiene rubber in a water solvent, wherein the amounts of the components were based on the total weight of the negative electrode active material slurry.

The negative electrode active material slurry was coated onto a copper current collector such that the negative electrode active material had a loading level of about 9.4 mg/cm². Subsequently, the resultant was dried and rolled to produce a negative electrode having an ionic resistance Rᵢₒₙ of 8.7 Ω·cm². Rolling was performed using a rolling mill to a mixture density of 1.6 g/cc. The ionic resistance was measured by a two-probe method using an impedance analyzer (Solartron 1260A Impedance/Gain-Phase Analyzer). EIS analysis was performed at room temperature (25°C), frequency range 100 kHz to 1 Hz, cell open-circuit voltage of amplitude 20 mV.

### Half-Cell:

A coin-type half-cell was produced using the positive electrode, the lithium metal counter electrode, and the electrolyte solution. As the electrolyte solution, ethylene carbonate and diethyl carbonate (50:50 volume ratio) in which 1.0 M LiPF₆ was dissolved were used.

A coin-type half-cell was produced using the negative electrode, the lithium metal counter electrode, and the electrolyte solution. As the electrolyte solution, ethylene carbonate and diethyl carbonate (50:50 volume ratio) in which 1.0 M LiPF₆ was dissolved were used.

### Full-Cell:

An electrode assembly was prepared by interposing a polyolefin separator between the positive electrode and the negative electrode prepared as described above. The electrode assembly was placed in a rechargeable battery pouch, and ethylene carbonate and diethyl carbonate (50:50 volume ratio) in which 1.0 M LiPF₆ was dissolved as an electrolyte solution were injected. The pouch was then sealed to produce a pouch-type rechargeable battery.

### Example 2

### Positive electrode:

In the preparation of the positive electrode active material slurry, 98.1% by weight of a lithium nickel-based composite oxide (LiNi_{0.922}Co_{0.067}Al_{0.011}O₂), 1.4% by weight of a PVDF binder, and 0.5% by weight of thin-wall carbon nanotubes were mixed in a N-methylpyrrolidone solvent.

A positive electrode was prepared in the same manner as in Example 1. The ionic resistance of the produced positive electrode was 16.0 Ω·cm²

### Negative electrode:

In the preparation of the negative electrode active material slurry, 7.7% by weight of the silicon-carbon composite, 88.52% by weight of graphite, 1.4% by weight of carboxymethyl cellulose, 0.06% by weight of single-walled nanotubes (SWCNTs), 0.12% by weight of polyvinylpyrrolidone and 2.2% by weight of styrene-butadiene rubber were mixed in a water solvent.

A negative electrode was produced in the same manner as in Example 1. The ionic resistance of the produced negative electrode was 9.7 Ω·cm².

### Half-Cell, Full-Cell:

A positive electrode half-cell, a negative electrode half-cell, and a rechargeable lithium battery full cell were produced in the same manner as in Example 1.

### Example 3

### Positive electrode:

In the preparation of the positive electrode active material slurry, 98.3% by weight of a lithium nickel-based composite oxide (LiNi_{0.922}Co_{0.067}Al_{0.011}O₂), 1.2% by weight of a PVDF binder, and 0.5% by weight of thin-wall carbon nanotubes were mixed in a N-methylpyrrolidone solvent.

A positive electrode was prepared in the same manner as in Example 1. The ionic resistance of the produced positive electrode was 15.2 Ω·cm²

### Negative electrode:

In the preparation of the negative electrode active material slurry, 7.7% by weight of the silicon-carbon composite, 88.32% by weight of graphite, 1.4% by weight of carboxymethyl cellulose, 0.06% by weight of single-walled nanotubes (SWCNTs), 0.12% by weight of polyvinylpyrrolidone and 2.4% by weight styrene-butadiene rubber were mixed in a water solvent.

A negative electrode was produced in the same manner as in Example 1. The ionic resistance of the produced negative electrode was 10.3 Ω·cm²

### Half-Cell, Full-Cell:

A positive electrode half-cell, a negative electrode half-cell, and a rechargeable lithium battery full cell were produced in the same manner as in Example 1.

### Example 4

### Positive electrode:

In the preparation of the positive electrode active material slurry, 98.3% by weight of a lithium nickel-based composite oxide (LiNi_{0.922}Co_{0.067}Al_{0.011}O₂), 1.2% by weight of a PVDF binder, and 0.5% by weight of thin-wall carbon nanotubes were mixed in a N-methylpyrrolidone solvent.

A positive electrode was prepared in the same manner as in Example 1. The ionic resistance of the produced positive electrode was 15.2 Ω·cm²

### Negative electrode:

In preparing the negative electrode active material slurry, 7.7% by weight of the silicon-carbon composite, 88.52% by weight of graphite, 1.4% by weight of carboxymethyl cellulose, 0.06% by weight of single-walled nanotubes (SWCNTs), 0.12% by weight of polyvinylpyrrolidone and 2.2% by weight of styrene-butadiene rubber were mixed in a water solvent.

A negative electrode was produced in the same manner as in Example 1. The ionic resistance of the produced negative electrode was 9.7 Ω·cm².

### Half-Cell, Full Cell:

A positive electrode half-cell, a negative electrode half-cell, and a rechargeable lithium battery full cell were produced in the same manner as in Example 1.

### Example 5

### Positive electrode:

In the preparation of the positive electrode active material slurry, 98.3% by weight of a lithium nickel-based composite oxide (LiNi_{0.922}Co_{0.067}Al_{0.011}O₂), 1.2% by weight of a PVDF binder, and 0.5% by weight of thin-wall carbon nanotubes were mixed in a N-methylpyrrolidone solvent.

A positive electrode was prepared in the same manner as in Example 1. The ionic resistance of the produced positive electrode was 15.2 Ω·cm²

### Negative electrode:

In the preparation of the negative electrode active material slurry, 7.7% by weight of the silicon-carbon composite, 88.32% by weight of graphite, 1.6% by weight of carboxymethyl cellulose, 0.06% by weight of single-walled nanotubes (SWCNTs), 0.12% by weight of polyvinylpyrrolidone and 2.2% by weight of styrene-butadiene rubber were mixed in a water solvent.

A negative electrode was produced in the same manner as in Example 1. The ionic resistance of the produced negative electrode was 10.0 Ω·cm².

### Half-Cell, Full-Cell:

A positive electrode half-cell, a negative electrode half-cell, and a rechargeable lithium battery full-cell were produced in the same manner as in Example 1.

### Comparative Example 1

### Positive electrode:

A lithium nickel-based composite oxide (LiNi_{0.922}Co_{0.067}Al_{0.011}O₂) particle having an average particle diameter of about 12 µm was used as a positive electrode active material, PVDF was used as a binder, and spherical nanocarbon particles having an average particle size (D50) of 32 nm and a specific surface area of 630 m²/g were prepared as a conductive material.

A positive electrode active material slurry was prepared by mixing 97.46% by weight of a lithium nickel-based composite oxide (LiNi_{0.922}Co_{0.067}Al_{0.011}O₂), 1.34% by weight of a PVDF binder, and 1.2% by weight of spherical nanocarbon particles in an N-methylpyrrolidone solvent.

The positive electrode active material slurry was coated onto an aluminum current collector such that the positive electrode active material had a loading level of about 20 g/cm². Thereafter, drying and rolling were performed to produce a positive electrode having an ionic resistance Rᵢₒₙ of 22.1 Ω·cm².

### Negative electrode:

A negative electrode was produced in the same manner as in Example 1.

### Half-Cell, Full-Cell:

A positive electrode half-cell, a negative electrode half-cell, and a rechargeable lithium battery full-cell were produced in the same manner as in Example 1.

### Comparative Example 2

### Positive electrode:

A lithium nickel-based composite oxide (LiNi_{0.922}Co_{0.067}Al_{0.011}O₂) particle having an average particle diameter of about 12 µm was used as a positive electrode active material, PVDF was used as a binder, and spherical nanocarbon particles having an average particle size (D50) of 32 nm and a specific surface area of 630 m²/g were prepared as a conductive material.

A positive electrode active material slurry was prepared by mixing 97.46% by weight of a lithium nickel-based composite oxide (LiNi_{0.922}Co_{0.067}Al_{0.011}O₂), 1.54% by weight of a PVDF binder, and 1% by weight of spherical nanocarbon particles in an N-methylpyrrolidone solvent.

The positive electrode active material slurry was applied onto an aluminum current collector such that the positive electrode active material had a loading level of about 20 g/cm². Thereafter, drying and rolling were performed to produce a positive electrode having an ionic resistance Rᵢₒₙ of 25.8 Ω·cm².

### Negative electrode:

A negative electrode having an ionic resistance Rᵢₒₙ of 8.7 Ω·cm² was produced by rolling in the same manner as in Example 1.

### Half-Cell, Full-Cell:

A positive electrode half-cell, a negative electrode half-cell, and a rechargeable lithium battery full-cell were produced in the same manner as in Example 1.

### Comparative Example 3

### Positive electrode:

A lithium nickel-based composite oxide (LiNi_{0.922}Co_{0.067}Al_{0.011}O₂) particle having an average particle diameter of about 12 µm was used as a positive electrode active material, PVDF was used as a binder, and spherical nanocarbon particles having an average particle size (D50) of 32 nm and a specific surface area of 630 m²/g were prepared as a conductive material.

A positive electrode active material slurry was prepared by mixing 97.66 wt % of a lithium nickel-based composite oxide (LiNi_{0.922}Co_{0.067}Al_{0.011}O₂), 1.34 wt % of a PVDF binder, and 1 wt % of spherical nanocarbon particles in an N-methylpyrrolidone solvent.

The positive electrode active material slurry was coated onto an aluminum current collector such that the positive electrode active material had a loading level of about 20 g/cm². Thereafter, drying and rolling were performed to produce a positive electrode having an ionic resistance Rᵢₒₙ of 23.0 Ω·cm².

### Negative electrode:

A negative electrode having an ionic resistance Rᵢₒₙ of 10.3 Ω·cm² was produced by rolling in the same manner as in Example 3.

### Half-Cell, Full-Cell:

A positive electrode half-cell, a negative electrode half-cell, and a rechargeable lithium battery full-cell were produced in the same manner as in Example 1.

### Comparative Example 4

### Positive electrode:

A positive electrode having an ionic resistance Rᵢₒₙ of 23.0 Ω·cm² was produced in the same manner as in Comparative Example 3.

### Negative electrode:

A negative electrode having an ionic resistance Rᵢₒₙ of 9.7 Ω·cm² was produced by rolling in the same manner as in Example 4.

### Half-Cell, Full-Cell:

A positive electrode half-cell, a negative electrode half-cell, and a rechargeable lithium battery full cell were produced in the same manner as in Example 1.

### Comparative Example 5

### Positive electrode:

A positive electrode having an ionic resistance Rᵢₒₙ of 23.0 Ω·cm² was produced in the same manner as in Comparative Example 3.

### Negative electrode:

A negative electrode having an ionic resistance Rᵢₒₙ of 10.0 Ω·cm² was produced by rolling in the same manner as in Example 5.

### Half-Cell, Full-Cell:

A positive electrode half-cell, a negative electrode half-cell, and a rechargeable lithium battery full-cell were produced in the same manner as in Example 1.

The ionic resistance values of the positive electrode and the negative electrode according to Examples and Comparative Examples and the ratio of an ionic resistance of the positive electrode to an ionic resistance of the negative electrode are shown in Table 1 below.

**Table 1:**

| Distinction | Positive electrode ionic resistance (R1ᵢₒₙ, Ω·cm²) | Negative electrode ionic resistance (R2ᵢₒₙ, Ω·cm²) | R1ᵢₒₙ / R2ᵢₒₙ |
|---|---|---|---|
| Example 1 | 15.0 | 8.7 | 1.72 |
| Example 2 | 16.0 | 9.7 | 1.65 |
| Example 3 | 15.2 | 10.3 | 1.48 |
| Example 4 | 15.2 | 9.7 | 1.57 |
| Example 5 | 15.2 | 10.0 | 1.52 |
| Comparative Example 1 | 22.1 | 8.7 | 2.54 |
| Comparative Example 2 | 25.8 | 8.7 | 2.97 |
| Comparative Example 3 | 23.0 | 10.3 | 2.23 |
| Comparative Example 4 | 23.0 | 9.7 | 2.37 |
| Comparative Example 5 | 23.0 | 10.0 | 2.30 |

### Evaluation Example 1. Lithium Deposition Amount

A rechargeable lithium battery (full-cell) according to each of Examples and Comparative Examples was charged so that DOD72 was reached within 15 minutes according to a step charging method (C-rate: 3.5 C/2.8 C/2.4 C/2 C/1.6 C), and then discharged to 0.1 C without a waiting time. The charge/discharge was taken as one cycle, and the lithium deposition amount was measured by dividing the capacity in the flat section of the voltage profile appearing during discharge by the charged capacity, and the results are shown in Table 2 below.

### Evaluation Example 2. High-Rate Property Evaluation

A rechargeable lithium battery full-cell produced according to each of Examples and Comparative Examples was charged and discharged once at 0.2 C and then charged and discharged once 3 C. The ratio of the 3C charge capacity to the 0.2C charge capacity is then defined as "High Charge Rate (%)" and is shown in Table 2 below.

In addition, a rechargeable lithium battery (full-cell) according to each of Examples and Comparative Examples was charged so that DOD72 was reached within 15 minutes according to a step charging method (C-rate: 3.5 C/2.8 C/2.4 C/2 C/1.6 C), and then discharged to 1/3 C. The charge/discharge was taken as one cycle, and 300 cycles were repeated with a waiting time of 10 minutes between the charge/discharge cycles, and then the 300-cycle discharge capacity was measured. The percentage of the 300-cycle discharge capacity relative to the initial discharge capacity is defined as "capacity retention rate (%)" and shown in Table 2 below.

**Table 2:**

| Distinction | Lithium Deposition Amount (%) | High Charge Rate (3.0C/0.2C, %) | Capacity Retention Rate (%) |
|---|---|---|---|
| Example 1 | 0.2% | 68.24% | 90.70% |
| Example 2 | 0.2% | 67.01% | 92.51% |
| Example 3 | 0.0% | 66.54% | 91.65% |
| Example 4 | 0.2% | 67.23% | 92.34% |
| Example 5 | 0.3% | 66.87% | 91.22% |
| Comparative Example 1 | 0.3% | 64.38% | 88.67% |
| Comparative Example 2 | 0.5% | 61.25% | 88.24% |
| Comparative Example 3 | 0.4% | 63.89% | 88.12% |
| Comparative Example 4 | 0.3% | 64.07% | 89.97% |
| Comparative Example 5 | 0.5% | 62.00% | 88.30% |

Referring to Table 2, it can be seen that the rechargeable lithium battery according to the examples in which the ionic resistance ratio of the positive electrode and the negative electrode was adjusted reduced lithium deposition. In addition, it can be confirmed that the high-rate characteristics are improved by balancing the positive and negative electrode ionic resistances.

The rechargeable lithium battery of the present disclosure can exhibit desired or improved fast-charging characteristics. For example, the rechargeable lithium battery of the present disclosure can have a predetermined or desired positive/negative electrode ionic resistance ratio, thereby exhibiting desired or improved fast-charging characteristics.

While this disclosure has been described in connection with what is presently considered to be example embodiments, it is to be understood that the present invention is not limited to the disclosed example embodiments and is intended to cover various modifications and equivalent arrangements included within the spirit and scope of the appended claims, and therefore the aforementioned embodiments should be understood to be examples but not limiting this disclosure in any way.

## Claims

1. A rechargeable lithium battery (100), comprising:
a positive electrode (10);
a negative electrode (20); and
a separator (30) interposed between the positive electrode (10) and the negative electrode (20), wherein
the positive electrode (10) comprises a positive electrode active material, a first binder, and a first conductive material,
the first conductive material comprises carbon nanotubes, and
a ratio of an ionic resistance of the positive electrode (10) to an ionic resistance of the negative electrode (20) is in a range of ≥ 1.4 to ≤ 2.0.

2. The rechargeable lithium battery (100) as claimed in claim 1, wherein the ionic resistance of the positive electrode (10) is in a range of ≥ 12 Ω·cm² to ≤ 18 Ω·cm².

3. The rechargeable lithium battery (100) as claimed in claim 1 or 2, wherein the ionic resistance of the negative electrode (20) is in a range of ≥ 6 Ω·cm² to ≤ 12 Ω·cm².

4. The rechargeable lithium battery (100) as claimed in any of the claims 1 to 3, wherein the carbon nanotubes comprise thin-wall carbon nanotubes (TWCNTs) having an aspect ratio in a range of ≥ 10 to ≤ 3000.

5. The rechargeable lithium battery (100) as claimed in any of the claims 1 to 4, wherein a wall thickness of the thin-wall carbon nanotubes is in a range of ≥ 0.34 nm to ≤ 1.70 nm.

6. The rechargeable lithium battery (100) as claimed in any of the claims 1 to 5, wherein the positive electrode active material comprises at least one of a lithium nickel-based oxide, a lithium cobalt-based oxide, a lithium manganese-based oxide, a lithium iron phosphate-based compound, a cobalt-free nickel-manganese-based oxide, and a combination thereof.

7. The rechargeable lithium battery (100) as claimed in any of the claims 1 to 6, wherein:
the positive electrode (10) comprises a positive electrode current collector and a positive electrode active material layer on the positive electrode current collector, and
an amount of the positive electrode active material in the positive electrode active material layer is in a range of ≥ 97.5 wt% to ≤ 99.5 wt%.

8. The rechargeable lithium battery (100) as claimed in any of the claims 1 to 7, wherein an amount of the first conductive material in the positive electrode active material layer is in a range of ≥ 0.1 wt% to ≤ 1 wt%.

9. The rechargeable lithium battery (100) as claimed in any of the claims 1 to 8, wherein:
the negative electrode (20) comprises a negative electrode current collector and a negative electrode active material layer on the negative electrode current collector, and
the negative electrode active material layer comprises a silicon-based negative electrode active material.

10. The rechargeable lithium battery (100) as claimed in any of the claims 1 to 9, wherein the silicon-based negative electrode active material comprises at least one of silicon, a silicon-carbon composite, a silicon oxide, a silicon-based alloy, and a combination thereof.

11. The rechargeable lithium battery (100) as claimed in any of the claims 1 to 10, wherein an amount of the negative electrode active material in the negative electrode active material layer is in a range of ≥ 90 wt% to ≤ 99 wt%.

12. The rechargeable lithium battery (100) as claimed in any of the claims 1 to 11, further comprising an electrolyte solution including a non-aqueous organic solvent and a lithium salt.
